# EUROPÄISCHE PATENTSCHRIFT

(11) **EP 4 160 188 B1**
(45) Veröffentlichungstag und Bekanntmachung des Hinweises auf die Patenterteilung: **11.10.2023**
(21) Anmeldenummer: 22198246.5
(22) Anmeldetag: 28.09.2022
(51) Int. Cl.: G01N 21/3563, G01N 21/3581, G01N 21/41, G01N 21/89, G01N 21/892, G01B 11/06

(54) **THZ-MESSVORRICHTUNG UND THZ-MESSVERFAHREN ZUM VERMESSEN EINES GEFÖRDERTEN PRÜFOBJEKTES**
THZ MEASURING DEVICE AND THZ MEASURING METHOD FOR MEASURING A CONVEYED TEST OBJECT
DISPOSITIF DE MESURE THZ ET PROCÉDÉ DE MESURE THZ PERMETTANT DE MESURER UN OBJET DE TEST TRANSPORTÉ

(30) Priorität: 28.09.2021 DE 102021125111
(43) Veröffentlichungstag der Anmeldung: 05.04.2023
(73) Patentinhaber: CiTEX Holding GmbH, 49324 Melle (DE)
(72) Erfinder: Thiel, Marius, 49090 Osnabrück (DE)
(74) Vertreter: Bremer, Ulrich

(56) Entgegenhaltungen:
- DE-A1-102017 114 879
- DE-A1-102019 119 491

## Beschreibung

Die Erfindung betrifft eine THz-Messvorrichtung und ein THz-Messverfahren zum Vermessen eines geförderten Prüfobjektes, z. B. eines extrudierten Stranges oder einer extrudierten Blaßfolie.

THz-Messvorrichtungen in Extrusionsanlagen dienen der Vermessung eines fortlaufend extrudierten Prüfobjektes, insbesondere eines Stranges, z. B. eine Rohres oder einer Folie. Einem Extruder wird ein Ausgangsmaterial als Schüttgut zugeführt, das der Extruder aufschmilzt und durch einen Spalt, z. B. Ringspalt extrudiert, wobei das so ausgebildete Extrusionsprodukt z. B. von einer Abzugseinrichtung entlang einer Transportrichtung abgezogen wird. Die THz-Messvorrichtung ist außerhalb des Prüfobjektes angeordnet und ermöglicht eine kontinuierliche Messung insbesondere der Schichtdicken sowie von Unregelmäßigkeiten des extrudierten Prüfobjektes.

Aus der DE 10 2018 104 705 B4 ist eine THz-Messvorrichtung bekannt, bei der ein THz-Sendestrahl in den Hohlraum innerhalb des extrudierten Rohres eingeführt und entlang der Längsachse geführt wird, wobei er von einem rotierenden Spiegel nach außen abgelenkt wird, um von innen heraus Eigenschaften des Rohres zu vermessen.

Eine derartige THz-Messvorrichtung ermöglicht somit eine Vermessung des Rohres von innen nach außen. Hierdurch soll insbesondere eine frühzeitige Vermessung des extrudierten Rohres, noch vor dem Durchlaufen der nachfolgenden Kühlstrecke, ermöglicht werden. Durch die Einkopplung des THz-Messstrahls von innen soll insbesondere der für die THz- Messvorrichtung erforderliche Bauraum um das Rohr herum reduziert werden, um keine Probleme mit einer ggf. vorgesehenen Kalibriervorrichtung zu bekommen. Durch den rotierenden Spiegel soll hierbei eine vollumfängliche Vermessung erreicht werden, ohne eine aufwendige Schienenführung der THz- Sensorvorrichtung um das Rohr herum vorzusehen.

Die DE 20 2016 008 526 U1 beschreibt eine Vorrichtung und ein Verfahren, bei denen aus einer Kalibriermessung und nachfolgenden Objektmessung sowohl ein Durchmesser und/oder Wanddicke als auch ein Brechungsindex des Materials eines Stranges ermittelt werden können.

DE 10 2014 214 046 B3 beschreibt eine Messvorrichtung zur Vermessung von Prüfobjekten mit einer Sender-Empfänger Einheit zum Emittieren und Detektieren von Strahlung in einer x-y-Ebene ausgehend von einem Strahlpunkt. Hierbei sind rechteckige Spiegel-Elemente vorgesehen.

DE 10 2017 125 740 A1 beschreibt eine THz-Messvorrichtung zum Messen mindestens einer Schichtdicke eines entlang einer Förderrichtung geförderten Messobjektes, mit einem THz-Haupt-Sensor zum Aussenden eines THz-Hauptstrahls entlang einer ersten optischen Achse in einer Detektionsebene senkrecht zu der Förderrichtung und zum Empfangen von entlang der ersten optischen Achse reflektierter THz-Strahlung, sowie mit mindestens einem THz-Zusatz-Sensor zum Aussenden eines THz-Zusatz-Strahls entlang einer zweiten optischen Achse, die außerhalb der Detektionsebene und/oder zu der Detektionsebene geneigt verläuft, zur Detektion der entlang der zweiten optischen Achse zurück reflektierten THZ-Zusatz-Strahlung. In einer Signalamplitude des THz-Zusatz-Sensors können Zusatz-Reflexionspeaks ermittelt werden, die von Fehlstellen in dem Messobjekt stammen.

DE 10 2019 109 340 A1 zeigt eine THz-Messvorrichtung und Messverfahren zum Erfassen eines Materiestroms an zwei zueinander versetzten Stellen, mit einem THz-Sendestrahl und einem Reflektor-Spiegel in einer optischen Achse, wobei über einen halbdurchlässigen Spiegel eine Messung in einer weiteren optischen Achse erfolgt.

DE 10 2019 119 491 A1 beschreibt eine THz-Messvorrichtung zum Vermessen eines geförderten extrudierten Prüfobjektes mit um eine Längsachse angeordneten THz-Transceivern, die THz-Sendestrahlen senkrecht zur Längsachse aussenden und empfangen und ein Messsignal liefern. Aus den Messsignalen werden bestimmte Eigenschaften des Prüfobjektes ermittelt.

Der Erfindung liegt die Aufgabe zu Grunde, eine THz-Messvorrichtung und ein THz-Messverfahren zu schaffen, die eine sichere Vermessung eines geförderten Prüfobjektes mit wenig Aufwand ermöglichen.

Diese Aufgabe wird durch eine THz-Messvorrichtung und ein THz-Messverfahren nach den unabhängigen Ansprüchen 1 und 15 gelöst. Die abhängigen Ansprüche beschreiben bevorzugte Weiterbildungen. Weiterhin ist eine Anordnung aus der THz-Messvorrichtung und dem Extruder, vorzugsweise weiterhin einer Kalibrierhülse, vorgesehen.

Die THz-Strahlung bzw. der vom THz-Transceiver ausgesandte THZ-Sendestrahl kann insbesondere im Frequenzbereich von 10 GHZ bis 50 THz, insbesondere 10 GHZ bis 10 THZ, insbesondere 20 GHz bis 3 THZ, vorzugsweise 50GHz bis 1 THz liegen. Somit kann die THz-Strahlung sich auch in den Bereich der Radarstrahlung und/oder Mikrowellenstrahlung erstrecken. Die THz-Strahlung kann insbesondere als direkte Laufzeitmessung und/oder mittels Frequenzmodulation und/oder als gepulste Strahlung ausgesandt und detektiert werden.

Die einzelnen THz-Transceiver können auch THz-Strahlung in unterschiedlichen Frequenzbereichen bzw. sich überlappenden Frequenzbereichen aussenden. Die einzelnen THz-Transceiver können auch THz-Strahlung mit unterschiedlichen Polaritäten aussenden.

Somit weist die THz-Messvorrichtung mehrere THz-Transceiver auf, die um eine Längsachse herum angeordnet sind, und mit ihren Achsen jeweils radial nach innen, insbesondere auf die optische Achse, ausgerichtet sind. Anders als in der DE 10 2018 104 705 B4 erfolgt somit eine Einkopplung von THz-Strahlung von außen durch das Prüfobjekt nach innen.

Weiterhin ist anders als in der DE 10 2018 104 705 B4 die Ausbildung von statischen Spiegelanordnungen vorgesehen, wobei vorteilhafterweise keine rotierenden oder sich drehenden Bauteile, insbesondere auch keine rotierenden Spiegel vorgesehen sind. Die mehreren, um die Längsachse bzw. das Prüfobjekt angeordneten THz-Transceiver senden jeweils ihren Sendestrahl nach innen durch das Prüfobjekt auf jeweils einen ersten Umlenkspiegel einer ersten Spiegeleinrichtung, wobei die ersten Umlenkspiegel, z. B. mit 45° Ausrichtung, den Sendestrahl jeweils entlang der Längsachse des Prüfobjektes bzw. der Messvorrichtung reflektieren, so dass dieser zu einem zweiten Umlenkspiegel einer zweiten Spiegeleinrichtung gelangt. Die erste Spiegeleinrichtung und die zweite Spiegeleinrichtung sind somit in Richtung der Längsachse zueinander versetzt. Der zweite Umlenkspiegel reflektiert den entlang der Längsachse verlaufenden Sendestrahl wiederum radial nach außen, z. B. unter einem Winkel von 90 Grad, so dass der Strahl von innen durch die Prüfobjektwand nach außen tritt.
Die Längsachse der THz-Messvorrichtung ist insbesondere die Längsachse des Messraums der THz-Messvorrichtung und/oder die Längsachse des Extruders und/oder die Längsachse des extrudierten Prüfobjektes. Das Prüfobjekt ist insbesondere ein Strang, z.B. ein Rohr und/oder ein Profil und/oder ein Kabel, oder auch eine Blaßfolie.

Hierbei können die von den ersten Umlenkspiegeln umgelenkten Sendestrahlen insbesondere parallel zu der Längsachse verlaufen; sie können aber auch gegenüber der Längsachse etwas geneigt verlaufen, wenn dies entsprechend durch die zweiten Umlenkspiegel dahingehend kompensiert wird, dass die zweiten Umlenkspiegel entsprechend angepasst sind und die Sendestrahlen dann in die radiale Richtung umlenken.

Die radiale Richtung der optischen Achsen der THz-Transceiver und die radiale Richtung der von den zweiten Umlenkspiegeln umgelenkten Radialstrahlen kann jeweils genau senkrecht zur Längsachse verlaufen, d.h. genau in einer Radialebene senkrecht zur Längsachse; sie können aber auch z. B. geneigt zu der Radialebene verlaufen, wenn dies durch die anderen Spiegel entsprechend kompensiert wird. So kann bei z. B. eine dritte Spiegeleinrichtung angepasst ist und die nicht genau senkrecht zur Längsachse verlaufenen Radialstrahlen wieder zu den zweiten Umlenkspiegeln zurück reflektieren, so ermöglicht die Erfindung durch den Versatz der Messebene gegenüber der Transceiver-Ebene auch gezielt eine Vermessung an Bereichen entlang der Längsachse, in denen die Formgebung des Prüfobjektes verändert wird oder noch nicht abgeschlossen ist. So verlaufen Rohre bei und nach ihrer Extrusion noch z.T. gekrümmt oder gewölbt, da sich der Durchmesser der plastischen Masse z. B. noch verringert; auch hier kann gemäß einem Aspekt der Erfindung eine Vermessung des extrudierten Prüfobjektes an einem derartigen Bereich erfolgen, wo die Grenzflächen noch nicht parallel zur Längsachse verlaufen, indem der Sendestrahl bzw. Radialstrahl entsprechend nicht genau senkrecht zur Längsachse ausgegeben wird, so dass er die Grenzflächen des Prüfobjektes vorzugsweise senkrecht durchquert. Somit kann die Messebene bei einer derartigen Ausbildung z. B. auch eine leicht konische Ausbildung aufweisen.

Gemäß einer vorteilhaften Ausbildung ist außen, d.h. insbesondere außerhalb des Prüfobjektes, eine dritte Spiegeleinrichtung vorgesehen, die den austretenden Strahl zurückreflektiert, so dass der Strahl vorteilhafterweise in gleicher Weise zurückverläuft, d. h. von der dritten Spiegeleinrichtung durch das Prüfobjekt zu der zweiten Spiegeleinrichtung, nachfolgend entlang der Längsachse zu der ersten Spiegeleinrichtung und zurück zu dem THz-Transceiver der THz-Messvorrichtung.
Statt einer dritten Spiegeleinrichtung kann in der zweiten Ebene grundsätzlich auch eine andere Vermessung erfolgen; so kann z. B. auch eine Reflexion am Prüfobjekt selbst erfolgen, so dass die so erzeugten Reflexionsstrahlen dann von der zweiten Spiegeleinrichtung zurück zu der ersten Spiegeleinrichtung geleitet werden.

Somit wird von jedem THz-Transceiver ein separater THz-Messstrahl ausgebildet, der jeweils eine Messung über die beiden Umlenkspiegel durchführt, vorzugsweise auch über die dritte Spiegeleinrichtung.

Die erfindungsgemäße Ausbildung ermöglicht einige Vorteile:
Zunächst können rotierende Bauteile ganz weggelassen werden. Hierbei wird insbesondere erkannt, dass die Ausbildung rotierender Spiegel und ähnlicher rotierender Bauteile bereits mit einem hohen Verschleiß und Ungenauigkeiten verbunden ist. Zwar kann ein im Bereich der Längsachse rotierender Spiegel einen Umlauf in relativ kurzer Zeit durchführen, und es sind keine außerhalb des Prüfobjektes angeordneten Schienen-Einrichtungen wie bei einem außen umlaufenden Sensor erforderlich. Innerhalb des Stranges, z. B. Rohres, insbesondere auch im Bereich des Extruders und des Ausgangsbereichs des Extruders, liegen jedoch sehr hohe Temperaturen vor, die zu einer Belastung der rotierenden Teile und ihrer Lager führen, so dass die Belastung und der Verschleiß hoch sind, wobei durch Temperaturunterschiede auch Ungenauigkeiten in der Führung der Spiegel aufgrund von Toleranzen auftreten können. Auch gravierende Bauraumrestriktionen insbesondere zur Übertragung von Bewegungsenergie jeglicher Art zur Rotationseinheit sowie darauf entstehende individuell erforderliche Anpassungen eines Extruders sind hier als problematisch anzusehen.

Hingegen wird durch die statische Ausbildung gemäß der Erfindung eine sichere, dauerhafte und reproduktive Messung ermöglicht.

Zwar ist zunächst der Material-Aufwand durch mehrere Umlenkspiegel etwas größer als bei einem einzigen rotierenden Spiegel; durch den geringen Verschleiß, und weiterhin auch durch den Wegfall eines Drehantriebes, können jedoch wiederum Kostenvorteile, bei höherer Messgenauigkeit erreicht werden. Darüber hinaus ist die erfindungsgemäße Lösung vorteilhafterweise mit statischen Spiegeln ohne die Notwenigkeit von bewegenden Teilen im Extruderbereich auf einfache Art und Weise nachrüstbar.

Erfindungsgemäß wird der THz-Sendestrahl vorteilhafterweise zunächst von außen durch das Prüfobjekt, d.h. z. B. die Rohrwand bzw. Wand des Stranges, eingekoppelt, um in den Innenraum zu gelangen, woraufhin die Umlenkungen und die Vermessung von innen nach außen erfolgt. Durch die Positionierung der THz-Transceiver außerhalb des Prüfobjektes können Systeme mit höherer Sendeleistung eingesetzt werden, die insbesondere auch thermisch und in Bezug auf Verdreckung sowie Abbrand nicht so beansprucht sind. Weiterhin wird bereits beim ersten Durchlaufen der THz-Strahlung von außen nach innen durch das Prüfobjekt, z. B. die Rohrwandung, eine Messung ermöglicht, die nachfolgend ausgewertet werden kann, zusätzlich zu der zweiten Messung. Erfindungsgemäß kann die Wand des Prüfobjektes somit an zwei in Richtung der Längsachse zueinander versetzten Bereichen vermessen werden, wobei Teilreflexionen an den Wandungen in einem einzigen Messsignal aufgenommen und getrennt ausgewertet werden können.

Ein weiterer erfindungsgemäßer Vorteil liegt in einer möglichen Kalibrierung des Systems. So kann zunächst eine Leermessung bzw. Kalibriermessung durchgeführt werden, bei der die Laufzeit von den THz-Transceivern zu der dritten Spiegeleinrichtung ermittelt wird, da die dritte Spiegeleinrichtung einen Total-Reflexionspeak liefert. Da die erfindungsgemäße Ausbildung statisch ist, kann diese Kalibriermessung mit einer nachfolgenden Messung an dem Prüfobjekt verglichen werden. Bei der nachfolgenden Objektmessung werden die Teilreflexionen an den Grenzschichten und die Total-Reflexion an der dritten Spiegeleinrichtung erfasst, so dass die Laufzeiten zu der Total-Reflexion zwischen der Kalibriermessung und der Objektmessung verglichen werden können. Durch diesen Vergleich kann zusätzlich zu der Vermessung von Schichtdicken ergänzend eine Ermittlung eines Brechungsindex durchgeführt werden, da ein Gleichungssystem aus beiden Messungen aufgestellt werden kann. Diese Ermittlung kann mit den aus dem eingangs genannten Stand der Technik bekannten Berechnungen erfolgen.
Vorzugsweise wird erkannt, dass der Hardware-Aufwand der dritten Spiegeleinrichtung gering ist, da diese in axialer Richtung zu der THz-Messvorrichtung versetzt vorgesehen sein kann, d.h. auch im Bereich des Extruders, insbesondere auch an der Kalibrierhülse bzw. einer Verlängerung der Kalibrierhülse. Somit ist gegebenenfalls für die dritte Spiegeleinrichtung kein zusätzlicher Hardware-Aufwand erforderlich. Somit wird auch eine Vermessung des Prüfobjektes im Bereich der Kalibrierhülse bzw. innerhalb der Kalibrierhülse ermöglicht, bei der das Material des extrudierten Prüfobjektes noch bei hoher Temperatur schmelzflüssig ist, so dass auch bei bekannter Schrumpfung eine Ermittlung des nachfolgend abgekühlten Prüfobjektes ermöglicht wird bzw. zusammen mit einer weiter hinten in der Extrusionsstrecke vorgesehenen zusätzlichen THz-Messvorrichtung eine genaue Ermittlung der Schrumpfung von dem schmelzflüssigen Material zu dem abgekühlten Prüfobjekt ermöglicht wird. Somit kann auch eine außerhalb der Kalibrierhülse angeordnete THz-Messvorrichtung eine Vermessung im Bereich der Kalibrierhülse ermöglichen, so dass platzmäßig eine Entkopplung erfolgen kann und die THz-Messvorrichtung mit ihren THz-Transceivern in einem temperaturmäßig nicht so belasteten Abstand zu dem Extruder positioniert werden kann.

Als dritte Spiegeleinrichtung kann statt der Kalibrierhülse eine Referenzhaube vorgesehen sein, die außerhalb des Prüfobjektes verläuft, so dass zwischen dem Prüfobjekt und der Referenzhaube ein Freiraum verbleibt. Hierdurch wird insbesondere auch sichergestellt, dass der Teil-Reflexionspeak des von innen an die Außenfläche tretenden Strahls sicher von dem Total- Reflexionspeak an der dritten Spiegeleinrichtung getrennt werden kann.

Es zeigt sich, dass durch die Anordnung mehrerer THz-Transceiver eine vollständige oder weitgehend vollständige Vermessung eines Prüfobjektes auch ohne Drehantrieb und rotierende Teile ermöglicht wird.

Erfindungsgemäß wird weiterhin ein Extrusionsverfahren mit einer unmittelbaren Regelung der Extrusions-Parameter des Extruders ermöglicht, da mit dem THz-Messverfahren eine sichere Ermittlung der Eigenschaften des Prüfobjektes während oder nach der Extrusion erfolgt.

Die ermittelten Eigenschaften des Prüfobjektes sind ein oder mehrere der folgenden Eigenschaften:
- eine Schichtdicke des Prüfobjektes an verschiedenen Stellen der Längsachse und/oder verschiedenen Umfangsstellen, d.h. insbesondere entlang der Längsachse, z. B. kontinuierlich entlang der Längsachse, vorzugsweise vollständig in Umfangsrichtung; somit wird vorzugsweise eine vollständige Vermessung des Prüfobjektes durchgeführt.

- ein Brechungsindex des Prüfobjektes bzw. die Lichtgeschwindigkeit in dem Prüfobjekt, wodurch somit Aussagen über die Materialeigenschaften ermöglicht werden,
- Einschlüsse von Luft und anderen Substanzen in dem Prüfobjekt (2), insbesondere Lunker und/oder Einschlüsse aus Abbrand in dem Prüfobjekt, wobei ein Abbrand auf der Innen- und Außenfläche des Prüfobjektes auch als Substanz in dem Prüfobjekt zu verstehen ist,
- ungleichmäßige Ausbildungen von Grenzflächen (2-1, 2-2) und nicht-parallel zur Längsachse (A) verlaufende Ausbildungen der Grenzflächen (2-1, 2-2) des Prüfobjektes (2), z. B. Sagging und Deformationen, wobei z. B. ein gewisses Sagging als zulässig bewertet werden kann.

Die einzelnen THz-Transceiver und die ersten Umlenkspiegel, können jeweils in einer gleichen Messebene angeordnet sein. Somit ergibt sich eine erste Messebene der THz-Messvorrichtung mit ihren THz-Transceivern und den ersten Umlenkspiegeln der ersten Spiegeleinrichtung.
Weiterhin können auch die zweiten Umlenkspiegel der zweiten Spiegeleinrichtung in einer gemeinsamen zweiten Messebene vorgesehen sein, und eine umfänglichere Messung des Prüfobjektes in dieser zweiten Messebene ermöglichen. Durch diese gemeinsame Anordnung in Längsrichtung können insbesondere auch die Spiegeleinrichtungen kompakt ausgebildet sein.

Alternativ hierzu können die ersten und/oder zweiten Umlenkspiegel jedoch auch in axialer Richtung, d. h. entlang der Längsachse, zueinander versetzt vorgesehen sein, so dass z. B. keine gemeinsame erste Messebene und/oder keine zweite gemeinsame Messebene ausgebildet wird. Hierdurch wird ermöglicht, dass bei begrenztem Raum, insbesondere auch im Bereich des Extruders und der Kalibrierhülse sowie ggf. weiterer Einrichtungen, die einzelnen Elemente Messungen an günstigen Positionen ermöglichen, ohne dass eine gemeinsame Ebene zur Positionierung erforderlich ist. Dieser Vorteil wird insbesondere auch durch die separate Ausbildung der THz-Transceiver und der ersten und zweiten Umlenkspiegel ermöglicht, und bildet einen weiteren Vorteil insbesondere gegenüber der eingangs genannten Ausbildung mit einem gemeinsamen rotierenden Spiegel.

Die erste und zweite Spiegeleinrichtung können in Transportrichtung unterschiedlich weit von dem Extruder entfernt angeordnet sein, wobei insbesondere die zweite Spiegeleinrichtung in Transportrichtung weiter von dem Extruder entfernt angeordnet ist; es kann auch die erste Spiegeleinrichtung weiter vom Extruder entfernt angeordnet sein als die zweite.

Die Erfindung wird im Folgenden anhand der beiliegenden Zeichnungen an einigen Ausführungsformen näher erläutert. Es zeigen:
- Fig. 1: eine Anordnung gemäß einer Ausführungsform der Erfindung im Schnitt entlang der Längsachse;
- Fig. 2: ein Schnitt senkrecht zur Längsachse der Anordnung aus Fig. 1 in der ersten Messebene;
- Fig. 3: eine Anordnung gemäß einer gegenüber Figur 1 geänderten Anordnung.

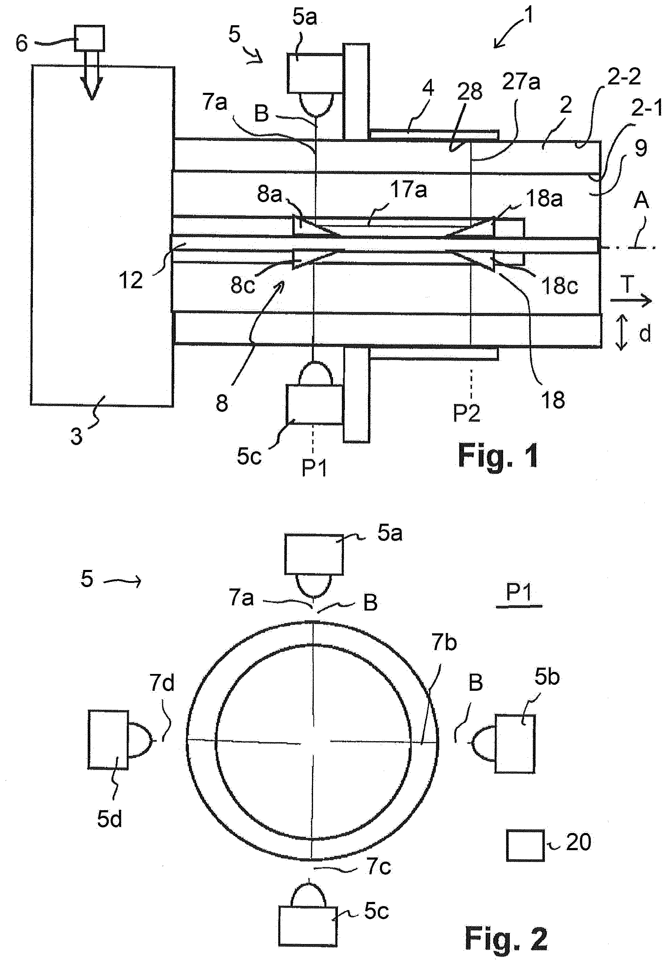

Eine Anordnung 1 dient zur Extrusion und Vermessung von Prüfobjekten, die insbesondere Stränge, z. B. Rohre 2, oder auch Blaßfolien sein können. Nachfolgend wird die Anordnung beispielhaft an einem Rohr 2 erläutert. Die Anordnung 1 weist einen Extruder 3, eine Kalibrierhülse 4 und eine THz-Messvorrichtung 5 zum Vermessen der extrudierten Rohre 2 auf. Dem Extruder 3 wird ein Ausgangsmaterial 6, insbesondere Kunststoff und/oder Gummi, ggf. mit Additiven oder als Mischung verschiedener Ausgangsstoffe, insbesondere als Schüttgut wie z. B. Pellets, Körner usw., zugeführt. Der Extruder 3 schmilzt das Ausgangsmaterial 6 auf und gibt das Rohr 2 bzw. den rohrförmigen Strang in Transportrichtung T aus. Das Rohr 2 wird nachfolgend insbesondere von einer Abzieh-Vorrichtung abgezogen und in einer Kühleinrichtung gekühlt. Hierbei wird das Rohr 2 im Wesentlichen entlang einer Transportachse A geführt, die die Symmetrieachse der Anordnung ausbildet. Das vom Extruder 3 ausgegebene, geschmolzene Material wird durch die Kalibrierhülse 4 kalibriert, d. h. in die vorgesehene Rohr-Form gebracht, wobei zur Kalibrierung noch weitere Elemente vorgesehen sein können. Anders als in Fig. 1 dargestellt kann der extrudierte Strang vor der Kalibrierhülse 4 im Allgemeinen noch eine abweichende Form aufweisen.

Die THz-Messvorrichtung 5 weist mehrere THz-Transceiver 5a, 5b, 5c und 5d auf, die mit ihrer jeweiligen optischen Achse B radial nach innen auf das extrudierte Rohr 2, insbesondere auf die Längsachse A, gerichtet sind. Die THz-Transceiver 5a - d geben jeweils einen THz-Sendestrahl 7a, 7b, 7c, 7d entlang ihrer optischen Achse B aus, der insbesondere im Frequenzbereich von 10 GHz bis 10 THz liegt, und direkt oder indirekt einer Laufzeitmessung dient, z. B. als direkte Laufzeitmessung, und/oder als frequenzmodulierter Strahl, und/oder als gepulste Strahlung.

In dem Innenraum 9 des Rohres 2 ist um die Längsachse A herum eine erste Spiegeleinrichtung 8 vorgesehen, die für jeden THz-Sendestrahl 7a - 7d einen ersten Umlenk-Spiegel 8a, 8b, 8c, 8d aufweist. Jeder erste Umlenkspiegel 8a - 8d ist als plane Spiegelfläche ausgebildet bzw. weist eine plane Spiegelfläche auf, die z. B. in einem Winkel von 45° gegenüber sowohl der Längsachse A als auch der jeweiligen optischen Achse B verläuft, und somit den jeweiligen THz-Sendestrahl 7a - 7d entlang, z. B. parallel zur Längsachse A umlenkt. Somit verläuft der THz-Sendestrahl 8a - 8d nachfolgend entlang der Längsachse A, z. B. als längs-paralleler Sendestrahl 17a - 17d, und gelangt nachfolgend zu der zweiten Spiegeleinrichtung 18, die wiederum entsprechend mehrere zweite Umlenkspiegel 18a - 18d aufweist. Die zweiten Umlenkspiegel 18a - 18d sind im Wesentlichen spiegelsymmetrisch zu den ersten Umlenkspiegeln 8a - 8d angeordnet, d. h. als schräge Spiegelfläche bzw. mit einer schrägen Spiegelfläche, die die längs-parallelen Sendestrahlen 17a - 17d jeweils wiederum radial nach außen, z. B. um 90° und somit senkrecht zur Längsachse A umlenken, so dass sie jeweils einen radialen Reflexionsstrahl 27a - 27d bilden, der somit radial von innen nach außen verläuft und in einer hinteren Messebene P2 von innen durch das Rohr 2 tritt.

Die beiden Spiegeleinrichtungen 8 und 18 können z. B. an einer in der Längsachse A verlaufenden Haltestange 12 befestigt sein, die am Extruder 3 bzw. im Bereich des Extruders 3 an einer weiteren Haltevorrichtung angebracht ist. Die Extrusion des Rohres 2 wird durch die Haltestange 12 und die Spiegeleinrichtungen 8, 18 nicht beeinflusst.

Außerhalb des Rohres 2 ist eine dritte Spiegeleinrichtung 28 vorgesehen, die gemäß der Ausführungsform der Fig. 1 durch die Kalibrierhülse 4 selbst gebildet wird, oder an der Innenseite der Kalibrierhülse 5 ausgebildet ist, z. B. als glatte Reflexionsschicht. Grundsätzlich kann die aus Metall gebildete Kalibrierhülse 4 somit selbst als dritte Spiegeleinrichtung 28 dienen. Die dritte Spiegeleinrichtung 28 reflektiert die radialen Reflexionsstrahlen 27a - 27 d jeweils um 180° zurück, so dass sie wiederum durch das Rohr 2, den Innenraum 9 des Rohres 2 und die zweite Spiegeleinrichtung 18 gelangen, nachfolgend entsprechend wiederum entlang der Längsachse A verlaufen, an der ersten Spiegeleinrichtung 8 reflektiert werden und entlang der optischen Achse B ihres jeweiligen THz-Transceivers 5a - 5d zurück verlaufen, hierbei wiederum durch das Rohr 2 treten und von dem jeweiligen THz-Transceiver 5a - 5d detektiert werden.

Jeder THz-Transceiver 5a - d nimmt somit ein Messsignal Sa - Sd auf, das die Reflexion bzw. Teilreflexionen an den jeweiligen Grenzflächen und Spiegelflächen zeigt: So gelangt der THz-Sendestrahl 7a gemäß Figur 1 links zunächst durch den vorderen Bereich des Rohres 2, wobei hier in diesem Bereich des Rohres 2 vor der Kalibrierhülse 4 ggf. noch keine senkrecht zur optischen Achse B verlaufenden Grenzflächen vorliegen. Die nachfolgenden Spiegeleinrichtungen 8, 18 führen zu keinem Reflexions-Peak; nachfolgend treten in den Messsignalen Sa - Sd Teil-Reflexionspeaks auf, wenn der jeweilige radial verlaufende Reflexionsstrahl 27a - 27d durch die innere Grenzfläche 2-1 tritt, und wenn er nachfolgend nach Durchqueren des Rohres 2 durch die Außenfläche 2-2 gelangt. Weiterhin tritt ein Total-Reflexionspeak an der Kalibrierhülse 4 bzw. der dritten Spiegeleinrichtung 28 auf. Beim nachfolgenden Durchqueren dieses Strahlverlaufs treten wiederum entsprechende Reflexionspeaks an den Grenzflächen 2-2 und 2-1 auf, sowohl in der hinteren Messebene P2 als auch der vorderen Messebene P1.

Zur Vermessung eines Rohres 2 kann zunächst vor der Extrusion, d. h. bei einem leeren Messraum, eine Leer-Messung bzw. Kalibrier-Messung durchgeführt werden, bei der somit in dem Messsignalen keine Teil-Reflexionspeaks an Grenzflächen 2-1 und 2-2 vorliegen und lediglich bei der Total-reflexion an der dritten Spiegeleinrichtung 28 ein Total-Reflexionspeak auftritt. Somit können die Laufzeiten t28a - t28d der THz-Strahlen 7a -7d der Sensoren 5a - 5d zu der dritten Spiegeleinrichtung 28 bei leerem Messraum ermittelt werden.

Indem nachfolgend eine Objektmessung mit dem Rohr 2 stattfindet, kann zusätzlich zu den Teil-Reflexionspeaks der jeweilige Total- Reflexionspeak an der dritten Spiegeleinrichtung 28 ermittelt werden. Somit kann aus der Differenz der Laufzeit t28a der Objektmessung des Rohres 2 und der entsprechenden Laufzeit t28a der Kalibriermessung eine Gesamt- Zeitverzögerung durch das zweimalige Durchqueren der Rohrwand des Rohres 2 ermittelt werden, zusätzlich zu den Laufzeit-Unterschieden zwischen den Grenzflächen 2-1 und 2-2. Aus der Gesamt-Laufzeitverzögerung und den Laufzeit-Unterschieden zwischen den Grenzflächen 2-1 und 2-2 können jeweils sowohl die Schichtdicke des Rohres 2, insbesondere auch in beiden Messebenen P1 und P2, als auch der Brechungsindex n2 des Materials des Rohres 2 ermittelt werden.

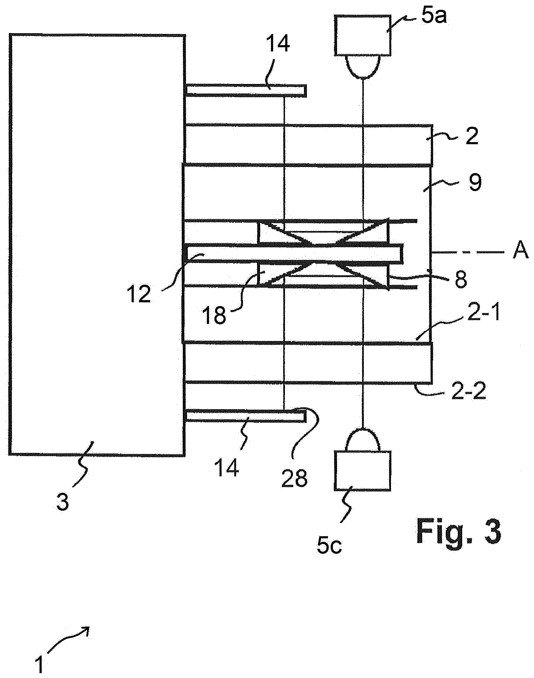

Bei der Ausführungsform der Figur 3 erfolgt grundsätzlich eine entsprechende Messung wie in Figur 1. Hierbei wird die dritte Spiegeleinrichtung 28 jedoch nicht an der Kalibrierhülse 4, sondern an einer Referenzhaube 14 ausgebildet, die zu dem Rohr 2 in radialer Richtung beabstandet ist. Somit wird hier eine messtechnisch vorteilhafte deutliche Trennung der Signale des Teil-Reflexionspeaks an der Außenfläche 2-2 und des Total-Reflexionspeaks an der dritten Spiegeleinrichtung 28 gewährleistet. Weiterhin kann die Position der Referenzhaube 14 unabhängig von der Position der Kalibrierhüse 4 gewählt werden. Die Schnittansicht entlang der Längsachse A bei der Ausführungsform der Figur 3 entspricht wiederum der Darstellung der Figur 2, d.h. in der ersten Messebene P1.

Die erste Spiegeleinrichtung 8 und die zweite Spiegeleinrichtung 18 sind in Längsrichtung bzw. entlang der Längsachse A getrennt und zueinander symmetrisch bzw. spiegelsymmetrisch angeordnet. Bei beiden Ausführungsformen, sowohl der Figur 1 als auch der Figur 3, können die Positionen bezüglich der Transportrichtung T frei gewählt werden. In Figur 1 ist die zweite Spiegeleinrichtung 18 in Transportrichtung T weiter außen, d. h. vom Extruder 3 bzw. Werkzeug weg, gegenüber der ersten Spiegeleinrichtung 8 versetzt. Auch in dieser Ausführungsform kann eine hierzu entgegengesetzte Ausbildung gewählt werden, bei der somit die erste Spiegeleinrichtung 8 weiter von dem Extruder 3 entfernt ist als die zweite Spiegeleinrichtung 18. Somit ist dann die THz-Messvorrichtung 5 hinter der Kalibrierhülse 4, d. h. weiter vom Extruder 3 entfernt, vorgesehen.

Entsprechend kann auch in der Ausbildung der Figur 3 die Position der Referenzhaube 14 derartig gewählt werden, dass sie weiter vom Extruder 3 entfernt als die THz-Messvorrichtung 5 angeordnet ist, d. h. in einer zu Figur 3 reversen Ausbildung des Strahlverlaufs.

Alternativ zu der Ausbildung gemeinsamer Messebenen P1 und P2 können die THz-Transceiver 5a - 5d und die ersten Umlenkspiegel 8a - 8d, und/oder die zweiten Umlenkspiegel 18a - 18d, jedoch auch an in Längsrichtung X zueinander versetzten Positionen angeordnet werden.

Die Messsignale Sa, Sb, Sc, Sd werden nachfolgend insbesondere von einer zentralen Steuereinrichtung 20 aufgenommen und gemeinsam ausgewertet, so dass eine umfängliche Vermessung der Schichtdicken d der Rohre 2 möglich ist. Hierbei kann der Extruder 3 in Abhängigkeit dieser Messung geregelt werden, z. B. über die Zuführmenge des Ausgangsmaterials 6 pro Zeit, und/oder über eine Abzugsgeschwindigkeit des nachfolgenden Abziehers.

### Bezugszeichenliste

- 1: Anordnung zur Extrusion und Vermessung von Prüfobjekten
- 2: Rohr
- 3: Extruder
- 4: Kalibrierhülse
- 5: THz-Messvorrichtung
- 5a - 5d: THz-Sensoren
- 6: Ausgangsmaterial
- 7a - 7d: THz-Sendestrahl
- 8: erste Spiegeleinrichtung
- 8a - 8d: erster Umlenkspiegel
- 9: Innenraum des Rohres 2
- 12: Haltevorrichtung, insbesondere Haltestange
- 17a - 17d: läng verlaufende, z. B. längs-parallele Sendestrahlen
- 18: zweite Spiegeleinrichtung
- 18a - 18d: zweiter Umlenkspiegel
- 20: zentrale Steuereinrichtung
- 27a - 27d: radiale Reflexionsstrahlen
- 28: dritte Spiegeleinrichtung

- A: Längsachse
- T: Transportrichtung
- P1: erste Messebene, vordere Messebene
- P2: zweite Messebene, hintere Messebene
- D: Schichtdicke des Rohres 2 bzw. der Rohrwand
- Sa, Sb, Sc, Sd: Messsignale der THz-Sensoren 5a, 5b, 5c, 5d
- 2-1: Innenfläche des Rohres 2
- 2-2: Außenfläche des Rohres 2

## Patentansprüche

1. THz-Messvorrichtung (5) zum Vermessen eines geförderten, insbesondere extrudierten Prüfobjektes (2),
wobei die THz-Messvorrichtung (5) aufweist:
ein oder mehrere um eine Längsachse (A) des Messraums der THz-Messvorrichtung angeordnete THz-Transceiver (5a, 5b, 5c, 5d),
eine erste Spiegeleinrichtung (8) mit ein oder mehreren ersten Umlenkspiegeln (8a, 8b, 8c, 8d),
eine gegenüber der ersten Spiegeleinrichtung (8) entlang der Längsachse (A) versetzt angeordnete zweite Spiegeleinrichtung (18) mit ein oder mehreren zweiten Umlenkspiegeln (18a, 18b, 18c, 18d),
wobei jeder THz-Transceiver (5a, 5b, 5c, 5d) ausgebildet ist, einen THz-Sendestrahl (7a, 7b, 7c, 7d) entlang seiner optischen Achse (B), die senkrecht zur Längsachse (A) verläuft, radial nach innen zu jeweils einem ersten Umlenkspiegel (8a, 8b, 8c, 8d) derartig zu senden,
dass der THz-Sendestrahl (7a, 7b, 7c, 7d) an dem ersten Umlenkspiegel (8a, 8b, 8c, 8d) reflektiert wird und entlang der Längsachse (A) als längsverlaufender Sendestrahl (17a, 17b, 17c, 17d) verläuft und nachfolgend an jeweils einem zweiten Umlenkspiegel (18a, 18b, 18c, 18d) radial nach außen als radialer Reflexionsstrahl (27a, 27b, 27c, 27d) reflektiert und umgelenkt wird, in einer Richtung senkrecht zur Längsachse (A), und nach einer Reflexion nach innen nachfolgend über die zweite Spiegeleinrichtung (18) und die erste Spiegeleinrichtung (8) zu dem jeweiligen THz-Transceiver (5a, 5b, 5c, 5d) zurück reflektiert wird, der ein Messsignal (Sa, SB, Sc, Sd) liefert,
wobei die THz-Messvorrichtung (5) ausgebildet ist, aus den Messsignalen der THz-Transceiver (5a, 5b, 5c, 5d) eine oder mehrere der folgenden Eigenschaften des Prüfobjektes (2) zu ermitteln:
- eine Schichtdicke (d) des Prüfobjektes (2) an verschiedenen Stellen der Längsachse (A) und/oder verschiedenen Umfangsstellen,
- einen Brechungsindex (n2) des Prüfobjektes (2),
- Einschlüsse von Luft und anderen Substanzen in dem Prüfobjekt (2)
- ungleichmäßige Ausbildungen von Grenzflächen (2-1, 2-2) und nicht-parallel zur Längsachse (A) verlaufende Ausbildungen der Grenzflächen (2-1, 2-2) des Prüfobjektes (2).

2. THz-Messvorrichtung (5) nach Anspruch 1, **dadurch gekennzeichnet, dass** sie mehrere, insbesondere vier oder mehr, in Umfangsrichtung um die zentrale Längsachse (A) und/oder das Prüfobjektes (2) verteilt angeordnete THz-Transceiver (5a, 5b, 5c, 5d) aufweist.

3. THz-Messvorrichtung (5) nach einem der vorherigen Ansprüche, **dadurch gekennzeichnet, dass** die THz-Transceiver und/oder die ersten Umlenk-spiegel (8a - 8d) und/oder die zweiten Umlenkspiegel (18a - 18d) jeweils statisch, insbesondere nicht-rotierend, angeordnet sind.

4. THz-Messvorrichtung (5) nach einem der vorherigen Ansprüche, **dadurch gekennzeichnet, dass**
die längs verlaufenden Sendestrahlen (17a, 17b, 17c, 17d) zu der Längsachse (A) versetzt, z. B. parallel versetzt, verlaufen, und/oder die THz-Sendestrahlen (7a, 7b, 7c, 7d) senkrecht zur Längsachse (A) verlaufen
und/oder die radialen Reflexionsstrahlen (27a, 27b, 27c, 27d) senkrecht zur Längsachse (A) verlaufen oder unter einem Auskopplungswinkel verlaufen, unter dem sie zu der zweiten Spiegelanordnung zurück reflektiert werden.

5. THz-Messvorrichtung (5) nach einem der vorherigen Ansprüche, **dadurch gekennzeichnet, dass** die ersten Umlenkspiegel (8a - 8e) und/oder die zweiten Umlenkspiegel (18a - 18d) jeweils unter einem Winkel von 45° sowohl gegenüber der Längsachse (A) als auch gegenüber dem THz-Sendestrahl (7a - 7d) und/oder gegenüber den radialen Reflexionsstrahlen (27a - 27d) verlaufen,
wobei jeder Umlenkspiegel eine plane, nicht gekrümmte, Fläche aufweist.

6. THz-Messvorrichtung (5) nach einem der vorherigen Ansprüche, **dadurch gekennzeichnet, dass** die erste Spiegeleinrichtung (8) und/oder die zweite Spiegeleinrichtung (18) an einer gemeinsamen Halteeinrichtung, z. B. einer in der Längsachse (A) verlaufenden Haltestange (12), aufgenommen sind.

7. THz-Messvorrichtung (5) nach einem der vorherigen Ansprüche, **dadurch gekennzeichnet, dass** die ersten Umlenkspiegel (8a - 8d) der ersten Spiegeleinrichtung (8) in einer gemeinsamen ersten Messebene (P1) angeordnet sind, und/oder
die zweiten Umlenkspiegel (18a - 18d) der zweiten Spiegeleinrichtung (18) in einer gemeinsamen zweiten Messebene (P2) angeordnet sind.

8. THz-Messvorrichtung (5) nach einem der Ansprüche 1 bis 6, **dadurch gekennzeichnet, dass**
zumindest ein Teil der zweiten Umlenkspiegel (18a - 18d) in Richtung der Längsachse (A) zueinander versetzt angeordnet ist, vorzugsweise ohne Ausbildung einer gemeinsamen zweite Messebene P2,
und/oder
zumindest ein Teil der ersten Umlenkspiegel (8a - 8d) zueinander entlang der Längsachse (A) versetzt angeordnet ist, vorzugsweise ohne Ausbildung einer gemeinsamen ersten Messebene (P1).

9. THz-Messvorrichtung (5) nach einem der vorherigen Ansprüche, **dadurch gekennzeichnet, dass**
sie weiterhin eine dritte Spiegeleinrichtung (28) aufweist, die radial außerhalb der zweiten Spiegeleinrichtung (18) angeordnet ist,
derartig, dass die dritte Spiegeleinrichtung (28) den an jeweils einem zweiten Umlenkspiegel (18a,18b, 18c, 18d) radial nach außen, senkrecht zur Längsachse (A), reflektierten radialen Reflexionsstrahl (27a, 27b, 27c, 27d) zurück zu dem zweiten Umlenkspiegel (18a, 18b, 18c, 18d) der zweiten Spiegeleinrichtung (18) reflektiert,
wobei die dritte Spiegeleinrichtung (28) den THz-Sendestrahl insbesondere jeweils über den zweiten Umlenkspiegel (18a,18b, 18c, 18d) zu der ersten Spiegeleinrichtung (8) und zu dem jeweiligen THz-Transceiver (5a, 5b, 5c, 5d) zurück reflektiert.

10. THz-Messvorrichtung (5) nach Anspruch 9, **dadurch gekennzeichnet, dass** die dritte Spiegeleinrichtung (28) angeordnet oder ausgebildet ist
- an der Innenfläche einer Kalibrierhülse (4) der Extrusionsvorrichtung, oder
- an einer Referenzhaube (14), die radial außerhalb eines Förderbereichs für das Prüfobjekt (2) angeordnet ist.

11. THz-Messvorrichtung (5) nach einem der vorherigen Ansprüche, **dadurch gekennzeichnet, dass** die beiden Spiegeleinrichtungen (18) in Transportrichtung (T) unterschiedlich weit von dem Extruder (3) entfernt angeordnet sind.

12. THz-Messvorrichtung (5) nach einem der vorherigen Ansprüche, **dadurch gekennzeichnet, dass** eine Steuereinheit (20) ausgebildet ist, aus einer Kalibriermessung ohne Prüfobjekt (2) und den nachfolgenden Messungen mit durchlaufendem, extrudierten Prüfobjekt (2) sowohl Schichtdicken (d) als auch den Brechungsindex (n2) des Prüfobjektes (2) zu bestimmen.

13. Anordnung (1) aus einer THz-Messvorrichtung (5) nach einem der vorherigen Ansprüche, dem Prüfobjekt (2) und einem Extruder (3) zum Aufnehmen von Ausgangsmaterial (6) und Ausgeben des extrudierten Prüfobjektes (2).

14. Anordnung (1) nach Anspruch 13, **dadurch gekennzeichnet, dass** sie weiterhin eine Kalibrierhülse (4) zum Kalibrieren des extrudierten Prüfobjektes (2) aufweist, wobei die Spiegeleinrichtung (28) an einer Innenseite der Kalibrierhülse (4) oder an der Kalibrierhülse (4) angebracht ist.

15. THz-Messverfahren zum Vermessen eines extrudierten Prüfobjektes, insbesondere eines extrudierten Stranges, z. B. Rohres (2), oder einer extrudierten Blaßfolie,
mit folgenden Schritten:
Anordnen oder Bereitstellen einer THz-Messvorrichtung (5) mit ein oder mehreren THz-Transceivern (5a, 5b, 5c, 5d), die um eine Längsachse (A) eines Extruders (3) herum angeordnet sind,
wobei der Extruder (3) ein Prüfobjekt (2) fortlaufend entlang der Längsachse (A) in einer Transportrichtung (T) extrudiert,
wobei die THz-Transceiver (5a, 5b, 5c, 5d) jeweils einen THz-Sendestrahl (7a, 7b, 7c, 7c) entlang ihrer jeweiligen optischen Achse (B) senkrecht zur Längsachse (A) nach innen durch das extrudierte Prüfobjekt (2) ausgeben, die THz-Sendestrahlen (7a - 7d) nachfolgend jeweils an einem ersten Umlenkspiegel (8a - 8d) einer ersten Spiegeleinrichtung (8) reflektiert werden derartig, dass sie entlang zur Längsachse (A) verlaufen,
nachfolgend die THz-Sendestrahlen (7a - 7d) an einer zweiten Spiegeleinrichtung (18) mit ein oder mehreren zweiten Umlenkspiegeln (18a - 18d) derartig reflektiert werden, dass sie als radiale Reflexionsstrahlen (27a, 27b, 27c, 27d) senkrecht zur Längsachse (A) radial nach außen verlaufen und durch das Prüfobjekt (2) nach außen treten,
wobei die THZ-Sendestrahlen nachfolgend von außen zurück nach innen durch das Prüfobjekt (2) zurück zu der zweiten Spiegeleinrichtung (18), der ersten Spiegeleinrichtung (8) und den THz-Transceivern (5a - 5d) reflektiert werden,
und aus Messsignalen (Sa, Sb, Sc, Sd) der THz-Transceiver (5a - 5d) eine oder mehrere der folgenden Eigenschaften des extrudierten Prüfobjektes (2) ermittelt werden:
- eine Schichtdicke (d) des Prüfobjektes (2) in verschiedenen Stellen der Längsachse (A) und/oder verschiedenen Umfangsstellen,
- einen Brechungsindex (n2) des Prüfobjektes (2),
- Einschlüsse von Luft und anderen Substanzen in dem Prüfobjekt (2)
- ungleichmäßige Ausbildungen von Grenzflächen (2-1, 2-2) und nicht-parallel zur Längsachse (A) verlaufende Ausbildungen der Grenzflächen (2-1, 2-2) des Prüfobjektes (2).

16. Verfahren nach Anspruch 15, **dadurch gekennzeichnet, dass** die von der zweiten Spiegeleinrichtung (18) nach außen durch das Prüfobjekt (2) reflektierten radialen Reflexionsstrahlen (27a, 27b, 27c, 27d) nachfolgend von einer dritten Spiegeleinrichtung (28) zurück zu der zweiten Spiegeleinrichtung (18) reflektiert werden,
und nachfolgend zu der ersten Spiegeleinrichtung (8) und den THz-Transceivern (5a - 5d) reflektiert werden.

17. Verfahren nach Anspruch 15 oder 16, **dadurch gekennzeichnet, dass** zunächst eine Kalibriermessung ohne das Prüfobjekt (2) durchgeführt wird, z. B. vor Produktionsstart, und nachfolgend THz-Messungen mit durchlaufendem extrudierten Prüfobjekt (2) durchgeführt werden, und aus einem Vergleich der Kalibriermessung mit den nachfolgenden THz-Vermessungen des durchlaufenden Prüfobjekt es (2) sowohl mindestens eine Schichtdicke (d) als auch ein Brechungsindex (n2) des Prüfobjekt es (2) ermittelt wird.

## Claims

1. THz measuring device (5) for measuring a transported, in particular extruded, measuring object (2),
said THz measuring device (5) comprising:
one or more THz transceivers (5a, 5b, 5c, 5d) arranged around a longitudinal axis (A) of the measuring space of the THz measuring device,
a first mirror means (8) including one or more first deflection mirrors (8a, 8b, 8c, 8d),
a second mirror means (18) being arranged offset along the longitudinal axis (A) in relation to the first mirror means (18), said second mirror means including one or more second deflection mirrors (18a, 18b, 18c, 18d),
each THz transceiver (5a, 5b, 5c, 5d) being configured to send a THz transmission beam (7a, 7b, 7c, 7d) along its optical axis (B), which runs perpendicular to the longitudinal axis (A), radially inwards towards a first deflection mirror (8a, 8b, 8c, 8d) each, in such a manner
that the THz transmission beam (7a, 7b, 7c, 7d) is reflected at the first deflection mirror (8a, 8b, 8c, 8d) and runs along the longitudinal axis (A) as a lengthwise running transmitted beam (17a, 17b, 17c, 17d) and is subsequently reflected at a second deflection mirror (18a,18b, 18c, 18d) each radial in a direction radially outwards as a radial reflected beam (27a, 27b, 27c, 27d) and is deflected, in a direction perpendicular to the longitudinal axis (A), and, following an inwards reflection, is subsequently reflected back via the second mirror means (18) and the first mirror means (8) towards the respective THz transceiver (5a, 5b, 5c, 5d), said THz transceiver supplying a measuring signal (Sa, SB, Sc, Sd),
said THz measuring device (5) being configured to determine one or more of the following properties of the measuring object (2) from the measurement signals of the THz transceivers (5a, 5b, 5c, 5d):
- a layer thickness (d) of the measuring object (2) at various locations of the longitudinal axis (A) und/or various locations on the circumference,
- a refraction index (n2) of the measuring object (2),
- inclusions of air and other substances inside the measuring object (2)
- irregular formation of boundary surfaces (2-1, 2-2), and formation of boundary surfaces (2-1, 2-2) of the measuring object (2) that are non-parallel to the longitudinal axis (A).

2. THz measuring device (5) according to claim 1, **characterised in that** the device includes a plurality of, in particular, four or more, THz transceivers (5a, 5b, 5c, 5d) arranged in a manner distributed in a circumferential direction around the central longitudinal axis (A) und/or the measuring object (2).

3. THz measuring device (5) according to one of the above claims, **characterised in that** the THz transceivers und/or the first deflection mirrors (8a - 8d) and/or the second deflection mirrors (18a - 18d) are each arranged statically, in particular, non-rotating.

4. THz measuring device (5) according to one of the above claims, **characterised in that**
die lengthwise running transmitted beams (17a, 17b, 17c, 17d) run offset in relation to the longitudinal axis (A) in a manner offset, e.g., offset in a parallel manner, and/or
the THz transmission beams (7a, 7b, 7c, 7d) run perpendicular to the longitudinal axis (A),
and/or the radial reflected beams (27a, 27b, 27c, 27d) run perpendicular to the longitudinal axis (A) or run at an out-coupling angle at which they are reflected back to the second mirror arrangement.

5. THz measuring device (5) according to one of the above claims, **characterised in that** the first deflection mirrors (8a - 8e) and/or the second deflection mirrors (18a - 18d) each run at an angle of 45° both in relation to the longitudinal axis (A) and to the THz transmission beam (7a - 7d) and/or in relation to the radial reflected beams (27a - 27d), each deflection mirror comprising a planar, non-curved surface.

6. THz measuring device (5) according to one of the above claims, **characterised in that** the first mirror means (8) and/or the second mirror means (18) are received at a common holding device, e.g., a supporting rod (12) extending in the longitudinal axis (A).

7. THz measuring device (5) according to one of the above claims, **characterised in that** the first deflection mirrors (8a - 8d) of the first mirror means (8) are arranged in a common first measuring plane (P1), and/or
the second deflection mirrors (18a - 18d) of the second mirror means (18) are arranged in a common second measuring plane (P2).

8. THz measuring device (5) according to one of the claims 1 through 6, **characterised in that**
at least part of the second deflection mirrors (18a - 18d) are arranged offset against one another in the direction of the longitudinal axis (A), preferably without forming a common second measuring plane P2, and/or
at least part of the first deflection mirrors (8a - 8d) are arranged offset against one another along the longitudinal axis (A), preferably without forming a common first measuring plane (P1).

9. THz measuring device (5) according to one of the above claims, **characterised in that**
it further comprises a third mirror means (28) arranged radially outside the second mirror means (18),
such that the third mirror means (28) reflects the radial reflected beam (27a, 27b, 27c, 27d), reflected radially outwards perpendicular to the longitudinal axis (A), at a second deflection mirror (18a,18b, 18c, 18d) each, back to the second deflection mirror (18a,18b, 18c, 18d) of the second mirror means (18),
said third mirror means (28) reflecting the THz transmission beam, in particular, each via the second deflection mirror (18a,18b, 18c, 18d), back to the first mirror means (8) and to the respective THz transceiver (5a, 5b, 5c, 5d).

10. THz measuring device (5) according to claim 9, **characterised in that** third mirror means (28) is arranged or configured
- on the interior surface of a calibration sleeve (4) of the extruder device, or
- at a reference hood (14) which is arranged radially outside a transport area for the measuring object (2).

11. THz measuring device (5) according to one of the above claims,
**characterised in that** the two mirror means (18) are arranged at differing distances from the extruder (3) in the transport direction (T).

12. THz measuring device (5) according to one of the above claims,
**characterised in that** a controller unit (20) is designed to determine both layer thicknesses (d) and the refraction index (n2) of the measuring object (2) from a calibration measurement without a measuring object (2) and the subsequent measurements with a traversing extruded measuring object (2).

13. Arrangement (1) comprising a THz measuring device (5) according to one of the above claims, the measuring object (2) and an extruder (3) for receiving starting material (6) and putting out the extruded measuring object (2).

14. Arrangement (1) according to claim 13, **characterised in that** it further comprises a calibration sleeve (4) for calibrating the extruded measuring object (2), the mirror means (28) being affixed to an interior side of the calibration sleeve (4) or at the calibration sleeve (4).

15. THz measuring method for measuring an extruded measuring object, in particular an extruded string, e.g. pipe (2), or an extruded blow film, including the following steps:
arranging or providing a THz measuring device (5) including one or more THz transceivers (5a, 5b, 5c, 5d) arranged around a longitudinal axis (A) of an extruder (3),
where the extruder (3) continuously extrudes a measuring object (2) along the longitudinal axis (A) in a transport direction (T),
the THz transceivers (5a, 5b, 5c, 5d) each putting out a THz transmission beam (7a, 7b, 7c, 7c) along their respective optical axis (B) perpendicular to the longitudinal axis (A) inwards through the extruded measuring object (2), the THz transmission beams (7a - 7d) subsequently being reflected each at a first deflection mirror (8a - 8d) of a first mirror means (8) such that they run along the longitudinal axis (A),
the THz transmission beams (7a - 7d) subsequently being reflected at a second mirror means (18) including one or more second deflection mirrors (18a - 18d) such that they run as radial reflected beams (27a, 27b, 27c, 27d) perpendicular to the longitudinal axis (A) radially outwards and pass through the measuring object (2) towards the outside,
the THZ-transmitted beams subsequently being reflected from the outside back towards the inside through the measuring object (2) back to the second mirror means (18), the first mirror means (8) and the THz transceivers (5a - 5d),
and wherein one or more of the following properties of the extruded measuring object (2) are determined from measuring signals (Sa, Sb, Sc, Sd) of the THz transceivers (5a - 5d):
- a layer thickness (d) of the measuring object (2) at various locations of the longitudinal axis (A) and/or various circumferential locations,
- a refraction of the measuring object (2),
- inclusions of air and other substances in the measuring object (2)
- irregular formation of boundary surfaces (2-1, 2-2) and formation of boundary surfaces (2-1, 2-2) of the measuring object (2) running non-parallel to the longitudinal axis (A).

16. Method according to claim 15, **characterised in that** the radial reflected beams (27a, 27b, 27c, 27d) beams reflected from the second mirror means (18) outwards through the measuring object (2) are subsequently reflected by a third mirror means (28) back to the second mirror means (18),
and subsequently reflected to the first mirror means (8) and the THz transceivers (5a - 5d).

17. Method according to claim 15 or 16, **characterised in that** firstly a calibration measurement is carried out without the measuring object (2), z e.g. prior to commencement of production, and subsequently THz measurements are carried out with a traversing extruded measuring object (2), and
at least one layer thickness (d) and a refraction index (n2) of the measuring object (2) is determined from a comparison of the calibration measurement to the subsequent THz measurements of the traversing measuring object (2).

## Revendications

1. Dispositif de mesure THz (5) conçu pour le mesurage d'un objet d'essai transporté, en particulier extrudé (2), ce dispositif de mesure THz (5) comportant :
un ou plusieurs émetteurs-récepteurs THz (5a, 5b, 5c, 5d) agencés autour d'un axe longitudinal (A) Z dans la chambre de mesure du dispositif de mesure THz,
un premier dispositif à miroirs (8) muni d'un ou plusieurs premiers miroirs de renvoi (8a, 8b, 8c, 8d),
un deuxième dispositif à miroirs (18) disposé de manière décalée par rapport au premier dispositif à miroirs (8) le long de l'axe longitudinal (A), comportant un ou plusieurs deuxièmes miroirs de renvoi (18a, 18b, 18c, 18d), sur lequel chaque émetteur-récepteur THz (5a, 5b, 5c, 5d) est configuré de telle manière qu'il émet un faisceau d'émission THz (7a, 7b, 7c, 7d) le long de son axe optique (B), faisceau qui a une trajectoire verticale par rapport à l'axe longitudinal (A), radialement vers l'intérieur, vers respectivement un premier miroir de renvoi (8a, 8b, 8c, 8d), de telle manière que le faisceau d'émission THz (7a, 7b, 7c, 7d) est réfléchi sur le premier miroir de renvoi (8a, 8b, 8c, 8d) et s'étend le long de l'axe longitudinal (A) en tant que faisceau d'émission dans le sens longitudinal (17a, 17b, 17c, 17d), et qu'il est ensuite réfléchi par respectivement un deuxième miroir de renvoi (18a,18b, 18c, 18d) radialement vers l'extérieur en tant que faisceau de réflexion radial (27a, 27b, 27c, 27d), et qui est renvoyé dans une direction verticale par rapport à l'axe longitudinal (A), et après une réflexion, il est réfléchi ensuite et renvoyé vers l'intérieur par le deuxième dispositif à miroirs (18) et le premier dispositif à miroirs (8) vers l'émetteur-récepteur THz respectif (5a, 5b, 5c, 5d) qui fournit un signal de mesure (Sa, SB, Sc, Sd), sur lequel le dispositif de mesure THz (5) est configuré de telle manière qu'il détermine à partir des signaux de mesure des émetteurs-récepteurs THz (5a, 5b, 5c, 5d) une ou plusieurs des caractéristiques suivantes de l'objet d'essai (2) :
une épaisseur de couche (d) de l'objet d'essai (2) sur différents emplacements de l'axe longitudinal (A) et/ou différents emplacements de la circonférence, un indice de réfraction (n2) de l'objet d'essai (2),
des inclusions d'air et d'autres substances dans l'objet d'essai (2)
des configurations irrégulières d'interfaces (2-1, 2-2) et des configurations qui suivent une trajectoire non parallèle à l'axe longitudinal (1) des interfaces ,2-1, 2-2) de l'objet d'essai (2).

2. Dispositif de mesure THz (5) selon la revendication 1, **caractérisé en ce qu'**il comporte plusieurs - en particulier quatre (ou davantage) - émetteurs-récepteurs THz (5a, 5b, 5c, 5d) agencés de manière répartie dans la direction de la circonférence autour de l'axe longitudinal central (A) et/ou de l'objet d'essai (2).

3. Dispositif de mesure THz (5) selon l'une des revendications précédentes, **caractérisé en ce que** les émetteurs-récepteurs THz et/ou les premiers miroirs de renvoi (8a - 8d) et/ou les deuxièmes miroirs de renvoi (18a - 18d) sont respectivement disposés de manière statique, en particulier non rotative.

4. Dispositif de mesure THz (5) selon l'une des revendications précédentes, **caractérisé en ce que** les faisceaux d'émission qui suivent une trajectoire longitudinale (17a, 17b, 17c, 17d) sont décalés par rapport à l'axe longitudinal (A), par ex. parallèles, et/ou les faisceaux d'émission THz (7a, 7b, 7c, 7d) suivent une trajectoire verticale par rapport à l'axe longitudinal (A) et/ou les faisceaux de réflexion radiaux (27a, 27b, 27c, 27d) suivent une trajectoire verticale par rapport à l'axe longitudinal (A) ou suivent un angle de découplage sous lequel ils sont réfléchis et renvoyés vers le deuxième dispositif à miroirs.

5. Dispositif de mesure THz (5) selon l'une des revendications précédentes, **caractérisé en ce que** les premiers miroirs de renvoi (8a - 8e) et/ou les deuxièmes miroirs de renvoi (18a - 18d) suivent une trajectoire respectivement sous un angle de 45° aussi bien par rapport à l'axe longitudinal (A) que par rapport au faisceau d'émission THz (7a - 7d) et/ou par rapport aux faisceaux de réflexion radiaux (27a - 27d), sur lequel chaque miroir de renvoi comporte une surface plane, non incurvée.

6. Dispositif de mesure THz (5) selon l'une des revendications précédentes, **caractérisé en ce que** le premier dispositif à miroirs (8) et/ou le deuxième dispositif à miroirs (18) est/sont logé(s) sur un dispositif de retenue commun, par ex. sur une tige de retenue (12) qui suit l'axe longitudinal (A).

7. Dispositif de mesure THz (5) selon l'une des revendications précédentes, **caractérisé en ce que** les premiers miroirs de renvoi (8a - 8d) du premier dispositif à miroirs (8) sont disposés sur un premier plan de mesure commun (P1), et/ou les deuxièmes miroirs de renvoi (18a - 18d) du deuxième dispositif à miroirs (18) sont disposés sur un deuxième plan de mesure commun (P2).

8. Dispositif de mesure selon l'une des revendications 1 à 6, **caractérisée en ce qu'**au moins une partie des deuxièmes miroirs de renvoi (18a - 18d) est agencée d'une manière décalée en direction de l'axe longitudinal (A) les uns par rapport aux autres, de préférence sans configurer un deuxième plan de mesure commun P2, et/ou au moins une partie des premiers miroirs de renvoi (8a - 8d) est agencée d'une manière décalée en direction de l'axe longitudinal (A), de préférence sans configurer un premier plan de mesure commun (P1).

9. Dispositif de mesure THz (5) selon l'une des revendications précédentes, **caractérisé en ce qu'**il comporte par ailleurs un troisième dispositif à miroirs (28) qui est agencé sur le plan radial à l'extérieur du deuxième dispositif à miroirs (18), à miroirs (28) reflète le faisceau de réflexion radial (27a, 27b, 27c, 27d) reflété sur le plan radial vers l'extérieur, verticalement par rapport à l'axe longitudinal (A), sur respectivement un deuxième miroir de renvoi (18a,18b, 18c, 18d) pour le renvoyer vers le deuxième miroir de renvoi (18a,18b, 18c, 18d) du deuxième dispositif à miroirs (18), sur lequel le troisième dispositif à miroirs (28) reflète et renvoie le faisceau d'émission THz en particulier respectivement par le deuxième miroir de renvoi (18a,18b, 18c, 18d) vers le premier dispositif à miroirs (8) et vers l'émetteur-récepteur THz (5a, 5b, 5c, 5d) respectif.

10. Dispositif de mesure THz (5) selon la revendication 9, **caractérisé en ce que** le troisième dispositif à miroirs (28) est agencé ou configuré sur la surface intérieure d'une douille de calibrage (4) du dispositif d'extrusion, ou sur un capot de référence (14) qui est installé sur le plan radial à l'extérieure de la zone de transport de l'objet d'essai (2).

11. Dispositif de mesure THz (5) selon l'une des revendications précédentes, **caractérisé en ce que** les deux dispositifs à miroirs (18) sont agencés dans la direction du transport (T) à une distance différente de l'extrudeuse (3) l'un de l'autre.

12. Dispositif de mesure THz (5) selon l'une des revendications précédentes, **caractérisé en ce qu'**une unité de commande (20) est configurée de telle manière qu'il permet de déterminer à partir d'une mesure de calibrage sans objet d'essai (2) et des mesures suivantes avec l'objet d'essai extrudé (2) qui le traverse, aussi bien les épaisseurs de couche (d) que l'indice de réfraction (n2) de l'objet d'essai (2).

13. Arrangement (1) constitué par un dispositif de mesure THz (5) selon l'une des revendications précédentes, par l'objet d'essai (2) et par une extrudeuse (3) pour la réception de matériel de départ (6) et la fourniture de l'objet d'essai extrudé (2).

14. Dispositif (1) selon la revendication 13, **caractérisé en ce qu'**il comporte par ailleurs une douille de calibrage (4) pour le calibrage de l'objet d'essai extrudé (2), sur laquelle le dispositif à miroirs (28) est fixé sur un côté intérieur de la douille de calibrage (4) ou sur la douille de calibrage (4).

15. Méthode de mesure THz pour le mesurage d'un objet d'essai extrudé, en particulier d'un toron extrudé, par ex. d'un tuyau (2) ou d'un film étirable extrudé, comportant les étapes suivantes :
Agencement ou mise à disposition d'un dispositif de mesure THz (5) muni d'un ou de plusieurs émetteurs-récepteurs THz (5a, 5b, 5c, 5d), qui sont disposés autour d'un axe longitudinal (A) d'une extrudeuse (3), sur lequel l'extrudeuse (3) extrudé en permanence un objet d'essai (2) le long de l'axe longitudinal (A) dans une certaine direction de transport (T), si bien que les émetteurs-récepteurs THz (5a, 5b, 5c, 5d) émettent respectivement un faisceau d'émission THz (7a, 7b, 7c, 7c) le long de leur axe optique respectif (B), verticalement par rapport à l'axe longitudinal (A), vers l'intérieur à travers l'objet d'essai (2) extrudé, les faisceaux d'émission THz (7a - 7d) sont ensuite réfléchis respectivement par un premier miroir de renvoi (8a - 8d) d'un premier dispositif à miroirs (8), de telle façon qu'ils suivent une trajectoire le long de l'axe longitudinal (A), et ensuite les faisceaux d'émission THz (7a - 7d) sont réfléchis par un deuxième dispositif à miroirs (18) avec un ou plusieurs deuxièmes miroirs de renvoi (18a - 18d), de telle manière qu'ils sortent en tant que faisceaux de réflexion radiaux (27a, 27b, 27c, 27d) verticalement par rapport à l'axe longitudinal (A) sur le plan radial vers l'extérieur et sortent vers l'extérieur à travers l'objet d'essai (2), sur lequel les faisceaux d'émission THz sont reflétés ensuite de l'extérieur vers l'intérieur à travers l'objet d'essai (2) pour être renvoyés et réfléchis vers le deuxième dispositif à miroirs (18), du premier dispositif à miroirs (8) et vers les émetteurs-récepteurs THz (5a - 5d), et une ou plusieurs des caractéristiques suivantes de l'objet d'essai (2) extrudé sont déterminées à partir des signaux de mesure (Sa, Sb, Sc, Sd) de l'émetteur-récepteur THz (5a - 5d) :
une épaisseur de couche (d) de l'objet d'essai (2) sur différents emplacements de l'axe longitudinal (A) et/ou sur différents emplacements de la circonférence,
un indice de réfraction (n2) de l'objet d'essai (2),
des inclusions d'air et d'autres substances dans l'objet d'essai (2)
des configurations irrégulières d'interfaces (2-1, 2-2) et des configurations des interfaces (21, 2-2) de l'objet d'essai (2) qui suivent une trajectoire non parallèle à l'axe longitudinal (A)

16. Procédé selon la revendication 15, **caractérisé en ce que** les faisceaux de réflexion radiaux (27a, 27b, 27c, 27d) reflétés par le deuxième dispositif à miroirs (18) sont ensuite reflétés vers l'extérieur par l'objet d'essai (2) par un troisième dispositif à miroirs (28) et renvoyés vers le deuxième dispositif à miroirs (18), et ensuite vers le premier dispositif à miroirs (8) et vers les émetteurs-récepteurs THz (5a - 5d).

17. Procédé selon la revendication 15 ou 16, **caractérisé en ce qu'**une mesure de calibrage est tout d'abord effectuée sans l'objet d'essai (2), par ex. avant le démarrage de la fabrication, et ensuite des mesures THz sont effectuées avec l'objet d'essai (2) extrudé qui traverse, et qu'à partir d'une comparaison entre la mesure de calibrage avec le mesurage THz suivant de l'objet d'essai (2) qui a traversé, on détermine aussi une épaisseur de couche (d) qu'un indice de réfraction (n2) de l'objet d'essai (2).
